# EUROPEAN PATENT SPECIFICATION

(11) **EP 3 575 962 B1**
(45) Date of publication and mention of the grant of the patent: **01.09.2021**
(21) Application number: 19168847.2
(22) Date of filing: 12.04.2019
(51) Int. Cl.: G06F 9/445, G06N 3/04, G06N 20/00, G06N 5/00, G06N 7/00

(54) **METHOD AND DEVICE FOR PRELOADING APPLICATION, STORAGE MEDIUM AND INTELLIGENT TERMINAL**
VERFAHREN UND VORRICHTUNG ZUM VORABLADEN EINER ANWENDUNG, SPEICHERMEDIUM UND INTELLIGENTES ENDGERÄT
PROCÉDÉ ET DISPOSITIF DE PRÉCHARGEMENT D'APPLICATION, SUPPORT D'ENREGISTREMENT ET TERMINAL INTELLIGENT

(30) Priority: 29.05.2018 CN 201810532722
(43) Date of publication of application: 04.12.2019
(73) Proprietor: GUANGDONG OPPO MOBILE TELECOMMUNICATIONS CORP., LTD., Wusha, Chang'an Dongguan, Guangdong 523860 (CN)
(72) Inventor: CHEN, Yan, Dongguan, Guangdong (CN); LIU, Yaoyong, Dongguan, Guangdong (CN)
(74) Representative: Manitz Finsterwald Patent- und Rechtsanwaltspartnerschaft mbB

(56) References cited:
- US-A1- 2014 372 356
- RICARDO BAEZA-YATES ET AL: "Predicting The Next App That You Are Going To Use", WEB SEARCH AND DATA MINING, ACM, 2 PENN PLAZA, SUITE 701 NEW YORK NY 10121-0701 USA, 2 February 2015 (2015-02-02), pages 285-294, XP058065486, DOI: 10.1145/2684822.2685302 ISBN: 978-1-4503-3317-7

## Description

### TECHNICAL FIELD

Embodiments of the disclosure relate to application loading technologies, and particularly to a method and device for preloading an application, a storage medium and an intelligent terminal.

### BACKGROUND

At present, terminals such as smart mobile phones, tablet computers, notebook computers and intelligent home appliances have become indispensable electronic devices in people's daily lives. With the intelligentization of terminals, operating systems are loaded in most of terminals, so that a variety of applications may be installed in the terminals to meet different requirements of users.

With the improvement of configurations of terminals, dozens and even hundreds of applications may be installed in most of terminals. Furthermore, with the enriching of functions of an application, more and more resources are required to be loaded during running of the application. A terminal may load resources required to start an application when a user chooses to start the application. The application enters an initial interface after a preloading is completed. The whole process usually takes several seconds or even tens of seconds and thus is relatively low in application starting efficiency and urgent to be improved.

US 2014/0372356A1 discloses a method for pre-launching applications in a computer system.

### SUMMARY

It is an object of the invention to provide a method and a device for preloading an application with which the above mentioned drawbacks can be overcome. This object is solved by the subject matter of the independent claims.

The aspects of the disclosure provide a method for preloading an application and a terminal, which may complete preparations for starting of an application to a relatively great extent, so as to increase a starting speed of the target application without affecting the display of a foreground application on the display screen.

A first aspect of the disclosure provides a method for preloading an application, which includes the following operations.

In response to receiving a push message from an application, a message content of the push message is acquired.

Whether the application is to be preloaded is determined based on the message content.

An application interface corresponding to the application to be preloaded is preloaded in a precreated preloading active window stack, a boundary coordinate corresponding to the preloading active window stack being located outside a coordinate range of a display screen.

A second aspect of the disclosure provides a device for preloading an application, which includes a content acquisition module, an application determination module and an application preloading module.

The content acquisition module is configured to, in response to receiving a push message from an application, acquire a message content of the push message.

The application determination module is configured to determine, based on the message content, whether the application is to be preloaded.

The application preloading module is configured to preload an application interface corresponding to the application to be preloaded in a precreated preloading active window stack, a boundary coordinate corresponding to the preloading active window stack being located outside a coordinate range of a display screen.

A third aspect of the disclosure provides a compute computer-readable storage medium, having a computer program stored thereon, the computer program being executed by a processor to implement the method for preloading an application described in the first aspect.

A fourth aspect of the disclosure provides a computer program including instructions for executing the steps of the method for preloading an application described in the first aspect when said program is executed by a computer.

### BRIEF DESCRIPTION OF DRAWINGS

FIG. 1 illustrates a flowchart of a method for preloading an application according to a first embodiment of the disclosure.
FIG. 2 illustrates a diagram of a relative position relationship between a preloading active window stack and a display region of a display screen according to a second embodiment of the disclosure.
FIG. 3 illustrates another diagram of a relative position relationship between a preloading active window stack and a display region of a display screen according to a third embodiment of the disclosure.
FIG. 4 illustrates a diagram of migration of an application interface according to a fourth embodiment of the disclosure.
FIG. 5 illustrates a flowchart of another method for preloading an application according to a fifth embodiment of the disclosure.
FIG. 6 illustrates a block diagram of a device for preloading an application according to a sixth embodiment of the disclosure.
FIG. 7 illustrates a structure diagram of an intelligent terminal according to a seventh embodiment of the disclosure.
FIG. 8 illustrates a block diagram of a smart mobile phone according to an eighth embodiment of the disclosure.

### DETAILED DESCRIPTION

The disclosure will further be described below in combination with the drawings and embodiments in detail. It is to be understood that the specific embodiments described herein are adopted to explain the disclosure and do not mean to limit the disclosure. In addition, for convenient description, not all but only part of structures related to the disclosure are illustrated in the drawings.

Before more detailed discussions about embodiments, some of the embodiments are described as processing or methods described as flowcharts. Although each operation in the flowcharts is described into sequential processing, many operations therein may be implemented in parallel, concurrently or simultaneously. In addition, a sequence of the operations may be rearranged. The processing may be terminated when operations thereof are completed, but there may also be additional operations not included in the drawings. The processing may correspond to a method, a function, a procedure, a subroutine, a subprogram and the like.

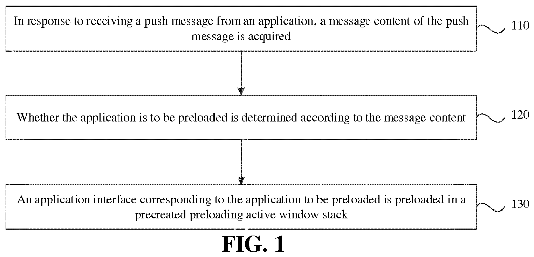

FIG. 1 illustrates a flowchart of a method for preloading an application according to a first embodiment of the disclosure. The method may be executed by a device for preloading an application. Herein, the device may be implemented by at least one of software or hardware and may usually be integrated in an intelligent terminal. As illustrated in FIG. 1, the method includes the following operations.

At block 110, in response to receiving a push message from an application, a message content of the push message is acquired.

The intelligent terminal in the embodiment of the disclosure may include a terminal such as a smart mobile phone, a tablet computer, a notebook computer, a handheld game console, an intelligent home appliance or the like. An operating system is loaded in the terminal. The operating system may be Android, iOS, BlackBerry OS, windows mobile or the like.

The push message may be an advertisement message, system message, hotspot information and the like pushed to the intelligent terminal installed with the application by a server corresponding to the application. The push message may be detected in a manner of querying codes of a notification subsystem.

In at least one alternative embodiment, in response to receiving the push message from the application, the message content of the push message is extracted, and the message content, an application identifier of the application, whether a user inputs an operation of starting the application responsive to the push message and the like are correspondingly stored.

At block 120, whether the application is to be preloaded is determined based on the message content.

The application to be preloaded may be understood as an application the user may be about to open and there may be one or more applications to be preloaded.

In at least one alternative embodiment, a prediction model may be adopted to predict the application to be preloaded based on the message content. The prediction model may be a machine learning model. An adopted algorithm may include a convolutional neural network (CNN), a recurrent neural network (RNN), a long short-term memory (LSTM) network, a threshold cycle unit, a simple cycle unit, autoencoder, a decision tree, random forest, characteristic mean classification, a classification and regression tree, hidden Markov, a k-nearest neighbor (KNN) algorithm, a logistic regression model, a Bayesian model, a Gaussian model, kullback-leibler (KL) divergence and the like.

In at least one alternative embodiment, when the user uses the intelligent terminal, a training sample may be collected and the training sample is adopted to train a preset initial model to finally obtain the prediction model for predicting the application to be preloaded. In at least one alternative embodiment, a historical push message from the application installed on the intelligent terminal and a starting operation of the user over the application corresponding to the historical push message are collected and the historical push message is marked based on the starting operation to obtain the training sample. If the user inputs the starting operation for the application corresponding to the historical push message, a mark 1 is added to the corresponding historical push message. Correspondingly, if the user does not input the starting operation for the application program corresponding to the historical push message, a mark 0 is added to the corresponding historical push message. In at least one alternative embodiment, elements included in the training sample may include at least one of the following: time, location and the like of the push message; a terminal state of the intelligent terminal, for example, an on/off state of a mobile data network, a connection state of a wireless hotspot, identity information of the connected wireless hotspot, application information, a plugging/unplugging state of an earphone jack, a charging state, battery power information and a display duration of a screen; or data acquired by a sensor, for example, a motion sensor, a light sensor, a temperature sensor and a humidity sensor, integrated in the intelligent terminal.

In at least one alternative embodiment, in response to detecting that a model training event is triggered, a historical push message sample marked based on the application starting operation, the terminal states corresponding to the historical push messages and the application information corresponding to the historical push messages are acquired as the training sample, and the prediction model is trained based on the training sample. Herein, a triggering condition for the model training event may be set according to a practical condition and will not be specifically limited in the embodiments of the disclosure. For example, the model training event may be triggered when the number of training samples exceeds a preset threshold. Or, the model training event may be triggered when a time interval with last training exceeds a preset time threshold. It is to be understood that the model training event may also be triggered when both of the conditions are met and the intelligent terminal is idle. Herein, that the intelligent terminal is idle may be indicated in a manner that a utilization rate of a central processing unit (CPU) is lower than a preset utilization rate, or an occupancy rate of a memory is lower than a preset occupancy rate or the like. When the prediction model is trained, only the historical push message sample marked based on the application starting operation may be adopted for training and, for improving accuracy of the prediction model, the historical push message sample, the terminal state and the application information may also be combined for training.

In at least one alternative embodiment, the appropriate sample elements may be selected based on the selected machine learning model, or the machine learning model to be adopted may also be determined based on the selected sample elements, or the model and the sample elements may also be selected in combination with requirements on the prediction accuracy, a prediction speed and the like. There are no limits made in the embodiment of the disclosure.

In the embodiments of the disclosure, the message content is input into the preconfigured prediction model, and a probability of the application to be preloaded is acquired based on the output of the prediction model. When the probability exceeds a set probability threshold, it is determined that the application is to be preloaded.

At block 130, an application interface corresponding to the application to be preloaded is preloaded in a precreated preloading active window stack.

A boundary coordinate corresponding to the preloading active window stack is located outside a coordinate range of a display screen.

An active window is understood as an independent interface directly oriented for interaction and operations of the user and the interface may be named after different names in different operating systems. For convenient understanding, descriptions will be made below with an Android operating system as an example.

In the Android system, the active window is also called activity. Activity is a component responsible for interaction with the user. The activity provides a screen (which may be understood as a screen interface, rather than a physical display screen) for interaction of the user to complete a certain task. In an Android application, an activity is usually an independent screen where some controls may be displayed and an event of the user may also be monitored and processed. During management over the activity, there are two concepts: task (task stack) and stack (active window stack). A task corresponds to an application. A task is used for storing an activity. One or more activities may be stored in a task and these activities follow a principle of "first in last out and last in first out". A stack is used for managing tasks. A stack usually manages tasks to which all activities required to be displayed on a screen belong. A stack may manage one or more tasks. The stack also follows a basic management principle of stacks. Herein, the screen may not always be a complete and independent display screen. For example, for "two screens", the two screens may only be two regions where respective display contents are independently displayed in a complete display screen. If a terminal has two and even more than two independent display screens, the "two screens" may also be two independent display screens.

In the Android system, a multi-window mode is supported and may include a split-screen mode, a picture-in-picture mode and a freeform mode. In the multi-window mode, a stack where the application is located may have its own size and may include upper, lower, left and right coordinates in a coordinate system taking an upper left corner of the screen of the terminal as an origin. For example, (a, b, c, d) usually describes a boundary of a rectangle and may be represented with a coordinate of an upper left corner of the rectangle and a coordinate of a lower right corner of the rectangle. That is, the coordinate of the upper left corner of the rectangle is (a, b) and the coordinate of the lower right corner is (c, d), and such a rectangular region corresponds to a size of the stack. A layout in an application in the stack depends on the size of the stack. That is, an application interface corresponding to the activity is displayed inside a boundary range of the size.

In the multi-window mode, multiple applications may be allowed to be in a visible state, including visibility for both of the system and the user and visibility only for the system. Visibility for both of the system and the user refers to that the application is displayed on the display screen and is visible for the user. Visibility only for the system refers to that the application is visible for the operating system and invisible for the user. That is, the application may be covered by a foreground application or is displayed outside the display screen as to be implemented in the application.

In at least one alternative embodiment, the operation that the application interface of the application to be preloaded is preloaded outside the display screen may be implemented on the basis of a multi-window mechanism of the operating system. The size corresponding to the application is set outside the display screen through the multi-window mechanism for invisibility for the user, so that influence on displaying of a display content of a foreground application on the display screen may be eliminated.

In the multi-window mode, various types of stacks may usually exist. For example, a home stack representing a stack for displaying of a desktop application, an App stack representing a stack for displaying of a third-party application and another split-screen stack. Contents in the three stacks may be displayed on the display screen and they are collectively referred to as application active window stacks in the embodiment of the disclosure. In at least one alternative embodiment, the preloading active window stack (preloading stack) is newly added to represent a stack for displaying of a preloaded application. The boundary coordinate of the preloading stack is set to be located outside the coordinate range of the display screen and the application to be preloaded may be displayed in the stack. For the Android system, a stack dedicated to displaying of the preloaded application may be newly created on the basis of the multi-window mechanism of the Android system. In at least one alternative embodiment, the stack is newly created to endow the newly created preloading stack with its own size and visibility, thereby achieving a purpose of preloading outside the display screen.

In at least one alternative embodiment, a creation opportunity for the preloading stack is not limited. The preloading stack may be set as a default before the terminal leaves the factory to be in a permanent state. That is, the preloading stack exists all the time. The preloading stack may also be created when the terminal is started or after the terminal is successfully unlocked. The preloading stack may further be created after an application preloading event is triggered (before the application to be preloaded is determined). In at least one alternative embodiment, the operation that the application interface corresponding to the application to be preloaded is preloaded in the precreated preloading active window stack includes that: whether the precreated preloading active window stack exists or not is judged; if the precreated preloading active window stack does not exist, the preloading active window stack is created according to a preset rule; and the application interface corresponding to the application to be preloaded is preloaded in the created preloading active window stack. Such a setting has the advantage that whether the preloading stack exists or not is judged after the application to be preloaded is determined, if the preloading stack exists, no preloading stack is required to be created and, if the preloading stack does not exist, a preloading stack will be created, so that a system resource may be saved. It is to be understood that, when there are multiple applications to be preloaded, namely when multiple applications are required to be continuously preloaded within a short time, if the preloading stack has been created before the first application to be preloaded is loaded, the preloading stack has been existed before the second application to be preloaded is loaded and no such judgment is required to be made.

In at least one alternative embodiment, a specific process of preloading the application interface corresponding to the application to be preloaded in the preloading stack is not limited. For example, the application interface may be drawn and displayed based on the size of the preloading stack.

According to the technical solution of the embodiment, in response to receiving the push message from the application, the message content of the push message is acquired; whether the application is to be preloaded is determined based on the message content; and the application interface corresponding to the application to be preloaded is preloaded in the precreated preloading active window. With adoption of the technical solution, for an application corresponding to a push message a user is interested in, an application interface of the application corresponding to the push message may be preloaded in the preloading active window stack created outside the display screen. In such a preloading manner, preparations for starting of an application may be completed to a relatively great extent, a starting speed of the target application (which may be understood as an application presently started by the user) may be increased and influence on displaying of a display content of a foreground application on the display screen may be eliminated.

In at least one alternative embodiment, the operation that the application interface corresponding to the application to be preloaded is preloaded in the precreated preloading active window stack includes that: a target process corresponding to the application to be preloaded is created; a task stack corresponding to the application to be preloaded is created in the precreated preloading active window stack; an active window corresponding to the application to be preloaded is started in the task stack based on the target process; and the application interface corresponding to the application to be preloaded is drawn and displayed on the started active window. Such a setting has the advantages that the application interface of the application to be preloaded may be drawn and displayed in the preloading active window stack outside the coordinate range of the display screen, so that interference to running and displaying of the foreground application is eliminated, system stability is ensured and, meanwhile, the starting speed of the target application is effectively increased. An initialization process of the target process may also be executed after the target process is created. In an execution process of the operations, preloading of another resource may also be involved, for example, application service starting, memory allocation, file content reading and network data acquisition. A preloading process for the other resource is not limited in the embodiment of the disclosure.

In at least one alternative embodiment, the method further includes that: a falsified focus notification is sent to the application to be preloaded, and updating of the application interface corresponding to the application to be preloaded are drawn and displayed continuously in a preset time period based on the falsified focus notification. Such a setting has the advantages that the application interface may be drawn and displayed under the condition that the application to be preloaded obtains a focus and is visible for the system, so that a completion degree of preloading is improved without influence on a focus of the foreground application. The focus in the embodiment of the disclosure is also called an input focus and a falsified focus is independent of the focus corresponding to the foreground application. Generally speaking, for the present Android system, the focus is unique. For example, an input operation such as touch is valid only for the focus. For input focus information, the system is consistent with the application. Once the system modifying the input focus information, information about that the input focus information changes may be sent to the application. In such a manner, consistency of the input focus information of the system and the application is ensured. In the embodiments of the disclosure, a purpose of falsifying the focus by the application is achieved in a manner of separating the input focus information of the system from the input focus information of the application. Specifically, in the embodiments of the disclosure, a focus notification is falsified for the preloaded application to provide the focus information for the preloaded application, and the focus information of the system is kept correct. By such processing, the preloaded application may be normally drawn to achieve a complete loading purpose. Existence of the focus in the system and the application may be considered as existence in a server and a client, the system records an application with the focus and the application stores a flag identifying whether the application has the focus or not. An opportunity for falsifying the input focus may be as follows: the falsified focus notification is generated and sent when a window system of Android has a newly added window and the focus is required to be updated. A focus falsification method may be a window focus changing method for a client calling a window and then the window may acquire the focus. Specifically, the falsified focus notification may be sent on the basis of a Binder mechanism. The Binder mechanism may be a most common manner for interprocess communication of the Android system and adopts a c/s architecture, i.e., a client/server architecture.

In at least one alternative embodiment, the preset time period may be designed according to an actual situation and, for example, may be a fixed duration after preloading is started or may also be a period from starting of preloading to completion of preloading. In some embodiments, a length of the preset time period includes a playing duration when an advertisement is started or an animation is started in the application to be preloaded. In starting processes of some applications, some advertisements or animations may usually be played, playing durations of the advertisements or the animations are usually 3 seconds to tens of seconds and, when the advertisements or the animations are played, it is impossible for the user to execute any operation and the user may only wait until they are completely played, so that precious time of the user is wasted. Such a setting in the embodiment of the disclosure has the advantages that a starting advertisement or a starting animation is played outside the screen before the target application is started and, when the target application is started, a home page of the application or another interface operable for the user may directly be entered, so that the target application may be operated earlier and waiting time is reduced.

In at least one alternative embodiment, after the operation that the application interface corresponding to the application to be preloaded is preloaded in the precreated preloading active window stack, the method further includes that: in response to receiving a running instruction for a target application, an application interface corresponding to the target application in the preloading active window stack is migrated to the display screen for displaying. Such a setting has the advantages that, when the target application is actually required to be started, the drawn application interface is directly migrated to the display screen for displaying, so that the application interface may be rapidly switched and the starting speed is increased.

In at least one alternative embodiment, the operation that the application interface corresponding to the target application in the preloading active window stack is migrated to the display screen for displaying includes that: a task stack corresponding to the target application in the preloading active window stack is migrated to a top of an application active window stack; and size information, configuration information and visibility of the task stack are updated to display, on the display screen, the application interface corresponding to the target application.

Such a setting has the advantages that stability of an interface migration process may be ensured and the problems of screen non-fluency, off screen, low migration speed and the like in a recovery process are solved.

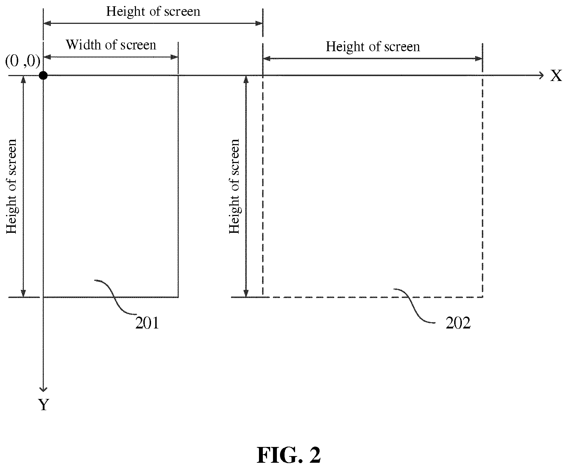

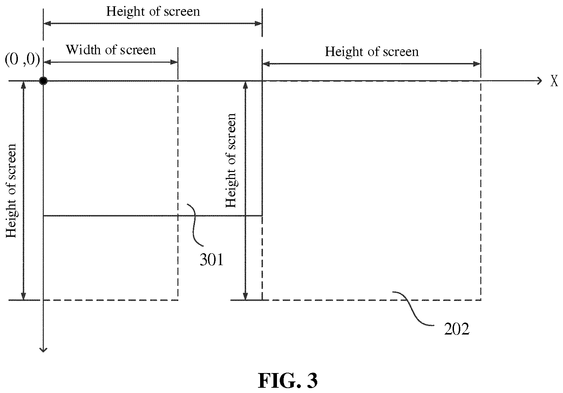

For some terminals, particularly a mobile terminal such as a mobile phone or a tablet computer, for facilitating use of the user, a display manner for a display screen usually includes portrait displaying and landscape displaying. Many applications are displayed in a portrait manner as a default and some applications (for example, some online games) are displayed in a landscape manner as a default. In a using process of the terminal, some applications may also be switched between portrait and landscape displaying manners based on a direction in which the user holds the terminal. In some embodiments of the disclosure, the boundary coordinate corresponding to the preloading active window stack is (H, 0, 2H, H), a coordinate system corresponding to the boundary coordinate is a system coordinate, an origin of the system coordinate is a upper left corner of the display screen, and H is a length of a long side of the display region of the display screen. That is, the side corresponding to H is a longest side of the display region of the display screen, is a height of the display screen during portrait displaying and is a width of the display screen during landscape displaying. Such a setting is made to consider a landscape mode of the display screen, landscape displaying of the preloaded application and normal displaying of some applications. FIG. 2 illustrates a diagram of a relative position relationship between a preloading active window stack and a display region of a display screen according to a second embodiment of the disclosure. As illustrated in FIG. 2, the portrait manner is adopted for the display screen, the origin of the system coordinate of the terminal is a left vertex (0, 0) of the display screen 201, a width direction of the display screen 201 is an X axis, a height direction is a Y axis, the boundary coordinate corresponding to the preloading stack 202 is (H, 0, 2H, H) and H is the height of the screen. That is, a region within a left solid rectangular range is a main screen display region and a region in a right dotted rectangular range is a preloading display region. FIG. 3 illustrates another diagram of a relative position relationship between a preloading active window stack and a display region of a display screen according to a third embodiment of the disclosure. As illustrated in FIG. 3, the landscape manner is adopted for the display screen, the origin of the system coordinate of the terminal is the left vertex (0, 0) of the display screen 301, the height direction of the display screen 301 is the X axis, the width direction is the Y axis, the boundary coordinate corresponding to the preloading stack 202 is (H, 0, 2H, H) and H is the height of the screen. That is, the region within the left solid rectangular range is the main screen display region and the region in the right dotted rectangular range is the preloading display region.

Reasons for setting each boundary of the preloading stack in such a manner are as follows.

An x coordinate of the upper left corner is set to be H to prevent the interface of the preloaded application is displayed in the display screen (which may also be called a main screen) in a landscape mode. Since both a portrait mode and the landscape mode may be adopted for the main screen, in the landscape mode of the main screen, for preventing part of the preloaded application from being displayed in the main screen display region, the x coordinate of the upper left corner of the rectangular region corresponding to the preloading stack is set to be the height of the screen.

A y coordinate of the upper left corner is set to be 0 to correctly calculate a height of a status bar of the preloaded application. For better designing a user interface (UI) of an Android application, a top status bar may be self-defined, and if the y coordinate corresponding to an upper side is not 0, the height of the status bar may be wrong.

An x coordinate of the lower right corner is set to be 2H (twice the height of the screen), namely the width of the rectangle corresponding to the preloading stack is equal to the height of the screen, so as to include a landscape application (i.e., an application of which an application interface adopts a landscape displaying manner) during preloading in the size of the preloading stack.

A y coordinate of the lower right corner is set to be H, namely the height of the rectangle corresponding to the preloading stack is equal to the height of the screen, so as to include a portrait application during preloading in the size of the preloading stack.

Based on the above reasons, the size of the preloading stack is set to be (H, 0, 2H, H) in the present disclosure.

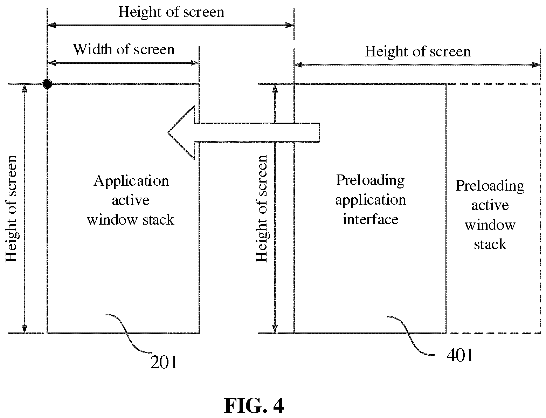

In addition, FIG. 4 illustrates a diagram of migration of an application interface according to a fourth embodiment of the disclosure. As illustrated in FIG. 4, in response to receiving the running instruction for the target application, the application interface 401 corresponding to the target application in the preloading active window stack is migrated to the display screen 201 for displaying. Specifically, a task to which the preloaded application interface belongs is migrated to the top of the application active window stack and the size information, configuration information and visibility of the stack are updated, so that the application interface may be normally displayed on the display screen.

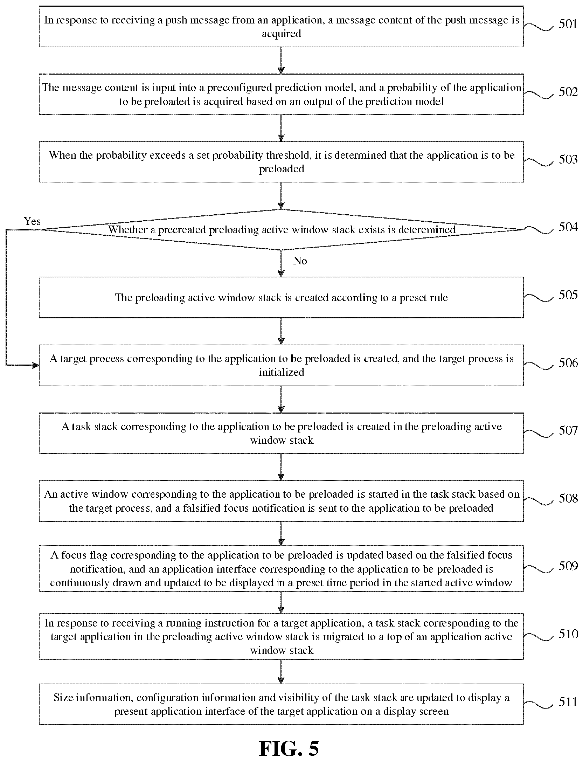

FIG. 5 illustrates a flowchart of another method for preloading an application according to a fifth embodiment of the disclosure. As illustrated in FIG. 5, the method includes the following operations.

At block 501, in response to receiving a push message from an application, a message content of the push message is acquired.

At block 502, the message content is input into a preconfigured prediction model, and a probability of the application to be preloaded is acquired based on an output of the prediction model.

At block 503, when the probability exceeds a set probability threshold, it is determined that the application is to be preloaded.

At block 504, whether a precreated preloading active window stack exists is determined, if no preloading active window stack exists, operation 505 is executed, and if the procreated preloading active window stack exists, operation 506 is executed.

At block 505, the preloading active window stack is created according to a preset rule.

Herein, operation 506 is executed after the preloading active window stack is created.

At block 506, a target process corresponding to the application to be preloaded is created, and the target process is initialized.

At block 507, a task stack corresponding to the application to be preloaded is created in the preloading active window stack.

At block 508, an active window corresponding to the application to be preloaded is started in the task stack based on the target process, and a falsified focus notification is sent to the application to be preloaded.

At block 509, a focus flag corresponding to the application to be preloaded is updated based on the falsified focus notification, and an application interface corresponding to the application to be preloaded is continuously drawn and updated to be displayed in a preset time period in the started active window.

At block 510, in response to receiving a running instruction for a target application, a task stack corresponding to the target application in the preloading active window stack is migrated to a top of an application active window stack.

Specifically, for example, an application active window is an App stack. A task is moved to the App stack, which may include that: the task is deleted from a list in an original stack (i.e., a preloading stack) and the task is added to a top in a new stack (i.e., the App stack). Each stack has a list configured to record all tasks in the stack. Correspondingly, each task may also record stack information corresponding to the task. Since a stack may have an attribute, such as a size, a configuration (configuration information), visibility and zorder, which may be different from that of another stack, an attribute such as zorder of a task may be changed only by adding the task into the list of a new stack. Addition to the top in the new stack is to make the task visible.

At block 511, size information, configuration information and visibility of the task stack are updated to display a present application interface of the target application on a display screen.

It is to be understood that, in a preloading process, the application interface corresponding to the target application is under continuous drawing and displaying updating, an opportunity when a user actually starts the target application is undetermined, the running instruction may be received in the preloading process, and then the application interface present displayed in the preloading stack may be migrated to the display screen for displaying. If the user starts the target application after preloading is completed, a last application interface when preloading is completed may be migrated to the display screen for displaying.

Specifically, the size information and configuration information of the task stack are updated to change a boundary of the application, which may specifically include that: the size and configuration information is actively updated. The size and configuration of the task may not be changed immediately only by use of the above task migration operation, so a method for modifying the size and configuration of the task may be actively called to ensure that the application is in a correct state and may work normally in foreground.

Specifically, the task is updated to be visible because, after the size and the configuration are updated, the target application may also be invisible. A method for updating the new stack to be visible is invoked to search an invisible application from top to bottom, set it to be visible and update a corresponding window surface to be visible. Herein, a method for judging a visible application may include that: the application is not covered by another application in zorder; the application is not covered by screen locking; and a state of a top activity of the application is not an initialized state or an exit state.

According to the technical solution of the embodiment, in response to receiving the push message from the application, whether the push message is that the user is interested in may be timely determined, if the user is interested in the push message, the application corresponding to the push message is directly preloaded and a preloading manner is to draw and display the application interface of the application in the preloading active window stack created outside the display screen, preparations for starting of an application may be completed to a relatively great extent, a starting speed of the target application (which may be understood as an application presently started by the user) may be increased and influence on displaying of a display content of a foreground application on the display screen may be eliminated.

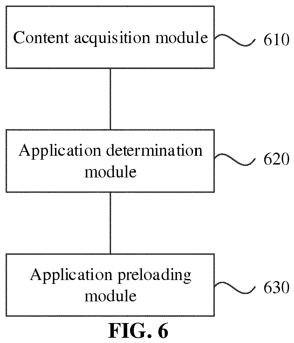

FIG. 6 illustrates a block diagram of a device for preloading an application according to a sixth embodiment of the disclosure. The device may be implemented by at least one of software or hardware and is usually integrated in an intelligent terminal. An application may be preloaded by executing a method for preloading an application. As illustrated in FIG. 6, the device includes a content acquisition module 610, an application determination module 620 and an application preloading module 630.

The content acquisition module 610 is configured to, in response to receiving a push message from an application, acquire a message content of the push message.

The application determination module 620 is configured to determine whether the application is to be preloaded based on the message content.

The application preloading module 630 is configured to preload an application interface corresponding to the application to be preloaded in a precreated preloading active window stack, a boundary coordinate corresponding to the preloading active window stack being located outside a coordinate range of a display screen.

According to the technical solution of the embodiment, for an application corresponding to a push message a user is interested in, an application interface of the application corresponding to the push message may be preloaded in the preloading active window stack created outside the display screen. In such a preloading manner, preparations for starting of an application may be completed to a relatively great extent, a starting speed of the target application (which may be understood as an application presently started by the user) may be increased and influence on displaying of a display content of a foreground application on the display screen may be eliminated.

In at least one alternative embodiment, the device further includes a model training module.

The model training module is configured to, in response to detecting that a model training event is triggered, acquire a historical push message sample marked based on an application starting operation, a terminal state corresponding to the historical push message and application program information corresponding to the historical push message as a training sample and train a prediction model based on the training sample.

The application determination module 620 is specifically configured to:
input the message content into a preconfigured prediction model and acquire a probability of the application to be preloaded based on the output of the prediction model; and
when the probability exceeds a set probability threshold, determine that the application is to be preloaded.

In at least one alternative embodiment, the application preloading module 630 is specifically configured to:
create a target process corresponding to the application to be preloaded;
create a task stack corresponding to the application to be preloaded in the precreated preloading active window stack;
start an active window corresponding to the application to be preloaded in the task stack based on the target process; and
draw and display the application interface corresponding to the application to be preloaded on the basis of the started active window.

In at least one alternative embodiment, the device further includes a focus falsification module.

The focus falsification module is configured to send a falsified focus notification to the application to be preloaded and continuously drawing and displaying updating of the application interface corresponding to the application to be preloaded in a preset time period based on the falsified focus notification, a length of the preset time period including a playing duration of a starting advertisement or starting animation in the application to be preloaded.

In at least one alternative embodiment, the device further includes an application running module.

The application running module is configured to, after the application interface corresponding to the application to be preloaded is preloaded in the precreated preloading active window stack, in response to receiving a running instruction for a target application, migrate an application interface corresponding to the target application in the preloading active window stack to the display screen for displaying.

In at least one alternative embodiment, the application running module is specifically configured to:
migrate the task stack corresponding to the target application in the preloading active window stack to a top of an application active window stack; and
update size information, configuration information and visibility of the task stack to display on the display screen, the application interface corresponding to the target application

An embodiment of the disclosure also provides a storage medium including computer-executable instructions, the computer-executable instructions being executed by a processor of a computer to execute a method for preloading an application. The method includes the following operations.

In response to receiving a push message from an application, a message content of the push message is acquired.

Whether the application is to be preloaded is determined based on the message content.

An application interface corresponding to the application to be preloaded is preloaded in a precreated preloading active window stack, a boundary coordinate corresponding to the preloading active window stack being located outside a coordinate range of a display screen.

The storage medium is a memory device or storage device of any type. Term "storage medium" is intended to include: an installation medium, for example, a compact disk read-only memory (CD-ROM), a floppy disk or a magnetic tape device; a computer system memory or a random access memory (RAM), for example, a dynamic RAM (DRAM), a double data rate (DDR) RAM), a static RAM (SRAM), an extended data output (EDO) RAM (EDO RAM) and a rambus RAM; a nonvolatile memory, for example, a flash memory and a magnetic medium (for example, a hard disk or an optical memory); and a register, a memory element of another similar type or the like. The storage medium may also include memories of other types or combinations thereof. In addition, the storage medium may be located in a first computer system where a program is executed or may be located in a second computer system different from the first computer system where the program is executed and the second computer system is connected to the first computer system through a network (for example, the Internet). The second computer system may provide program instructions to a first computer for executing. Term "storage medium" may include two or more storage media capable of residing at different positions (for example, in different computer systems connected through the network). The storage medium may store program instructions (for example, specifically implemented as a computer program) executable for one or more processors.

In the storage medium including the computer-executable instructions in the embodiments of the disclosure, the computer-executable instructions are not limited to the abovementioned application preloading operation and may also execute related operations in the method for preloading an application provided in any embodiment of the disclosure.

An embodiment of the disclosure provides a computer program including instructions for executing the related steps of the method for preloading an application described above when said program is executed by a computer.

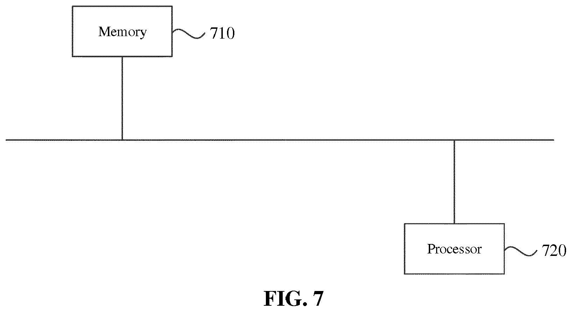

An embodiment of the disclosure provides an intelligent terminal with an operating system. The device for preloading an application provided in the embodiments of the disclosure may be integrated in the intelligent terminal. Herein, the intelligent terminal may be a terminal such as a smart mobile phone, a tablet computer, a notebook computer, a handheld game console or an intelligent home appliance. FIG. 7 illustrates a structure diagram of an intelligent terminal according to a seventh embodiment of the disclosure. As illustrated in FIG. 7, the intelligent terminal includes a memory 710 and a processor 720. The memory 710 is configured to store a computer program. The processor 720 is configured to read and execute the computer program stored in the memory 710. The processor 720 executes the computer program to implement the following operations. In response to receiving a push message from an application, a message content of the push message is acquired. Whether the application is to be preloaded is determined based on the message content. An application interface corresponding to the application to be preloaded is preloaded in a precreated preloading active window stack, a boundary coordinate corresponding to the preloading active window stack being located outside a coordinate range of a display screen.

In at least one alternative embodiment, the processor 720 may be further configured to: input the message content into a prediction model, and acquire a probability of the application to be preloaded based on an output of the prediction model; and determine that the application is to be preloaded if the probability exceeds a set probability threshold.

In at least one alternative embodiment, the processor 720 may be further configured to: acquire, in response to detecting that a model training event is triggered, a historical push message sample marked based on an application starting operation, a terminal state corresponding to a historical push message and application information corresponding to the historical push message as a training sample; and train, based on the training sample, a preset initial mode to obtain the prediction model.

In at least one alternative embodiment, the model training event may be triggered under one of the following conditions: a number of training samples exceeds a preset threshold; a time interval with a last training exceeds a preset time threshold; or, a number of training samples exceeds a preset threshold, a time interval with a last training exceeds a preset time threshold, and a terminal is in idle.

In at least one alternative embodiment, the processor 720 may be further configured to: create a target process corresponding to the application to be preloaded; create a task stack corresponding to the application to be preloaded in the precreated preloading active window stack; start an active window corresponding to the application to be preloaded in the task stack based on the target process; and draw and display the application interface corresponding to the application to be preloaded in the started active window.

In at least one alternative embodiment, the processor 720 may be further configured to: send a falsified focus notification to the application to be preloaded; and continuously draw and display updating of the application interface corresponding to the application to be preloaded in a preset time period based on the falsified focus notification, a length of the preset time period comprising a playing duration of a starting advertisement or starting animation in the application to be preloaded.

In at least one alternative embodiment, the processor 720 may be further configured to: determine whether the precreated preloading active window stack exists; create the preloading active window stack according to a preset rule when no precreated preloading active window stack exists; and preload the application interface corresponding to the application to be preloaded in the created preloading active window stack.

In at least one alternative embodiment, the processor 720 may be further configured to: migrate, in response to receiving a running instruction for a target application, an application interface corresponding to the target application in the preloading active window stack to the display screen for displaying.

In at least one alternative embodiment, the processor 720 may be further configured to: migrate a task stack corresponding to the target application in the preloading active window stack to a top of an application active window stack; and update size information, configuration information and visibility of the task stack to display an application interface of the target application on the display screen.

In at least one alternative embodiment, a terminal is provided, which includes a memory, a processor and a computer program stored in the memory and capable of running on the processor, when the computer program in the memory is run, the processor is configured to: determine that an application is to be preloaded; send a falsified focus notification to the application to be preloaded; and continuously draw and display updating of an application interface corresponding to the application to be preloaded in a preset time period based on the falsified focus notification, the falsified focus notification indicates that the application to be preloaded has a falsified focus independent of a focus corresponding to a foreground application.

In at least one alternative embodiment, the preset time period may include a fixed duration after preloading is started or a period from starting of preloading to completion of the preloading.

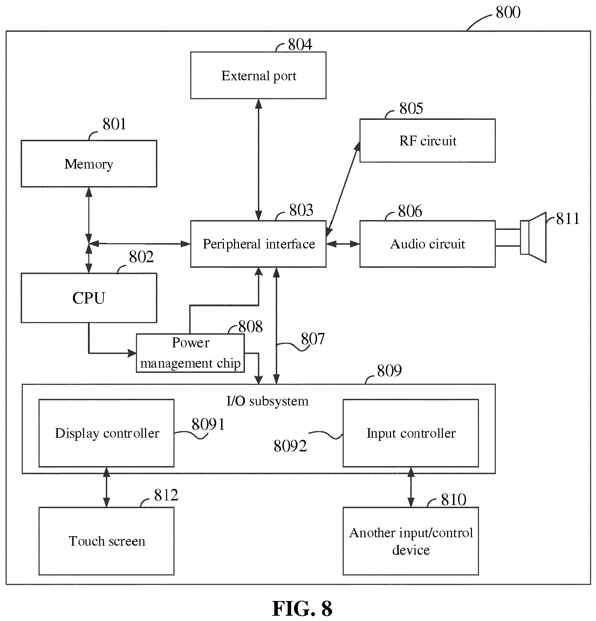

Both of the memory and processor listed in the above example are part of components of the intelligent terminal. The intelligent terminal may further include other components. A possible structure of the intelligent terminal will be described with a smart mobile phone as an example. FIG. 8 illustrates a block diagram of a smart mobile phone according to an eighth embodiment of the disclosure. As illustrated in FIG. 8, the smart mobile phone may include: a memory 801, a CPU 802 (also called a processor), a peripheral interface 803, a radio frequency (RF) circuit 805, an audio circuit 806, a speaker 811, a touch screen 812, a power management chip 808, an input/output (I/O) subsystem 809, another input/control device 810 and an external port 804. These components communicate through one or more communication buses or signal wires 807.

It is to be understood that the smart mobile phone 800 illustrated in the FIG. 8 is only an example of the intelligent terminal, the smart mobile phone 800 may further be provided with parts more or fewer than those presented in the FIG. 8, two or more parts may be combined or different part configurations may be adopted. Each part illustrated in the figure may be implemented in hardware including one or more signal processing and/or application specific integrated circuits, software or a combination of the hardware and the software.

The smart mobile phone integrated with an application preloading device in the embodiment will be described below in detail.

The memory 801: the memory 801 may be accessed by the CPU 802, the peripheral interface 803 and the like. The memory 801 may include a high-speed RAM and may further include a non-transitory memory, for example, at least one disk storage device, flash memory device or other volatile solid-state storage devices.

The peripheral interface 803: the peripheral interface 803 may connect an I/O peripheral of a device to the CPU 802 and the memory 801.

The I/O subsystem 809: the I/O subsystem 809 may connect the I/O peripheral, such as the touch screen 812 and the other input/control device 810 on the device to the peripheral interface 803. The I/O subsystem 809 may include a display controller 8091 and one or more input controllers 8092 configured to control the other input/control device 810. The one or more input controllers 8092 receives an electrical signal from the other input/control device 810 or send an electrical signal to the other input/control device 810. The other input/control device 810 may include a physical button (a pressing button, a rocker button and the like), a dial, a slide switch, an operating rod and a click wheel. The input controller 8092 may be connected with any one of a keyboard, an infrared port, a universal serial bus (USB) interface and an indication device such as a mouse.

The touch screen 812: the touch screen 812 is an input interface and output interface between a user terminal and a user and displays visual output to the user. The visual output may include a graph, a text, an icon, a video and the like.

The display controller 8091 in the I/O subsystem 809 receives the electrical signal from the touch screen 812 or sends the electrical signal to the touch screen 812. The touch screen 812 detects a touch on the touch screen. The display controller 8091 converts the detected touch into interaction with a UI object displayed on the touch screen 812 to implement human-computer interaction. The UI object displayed on the touch screen 812 may be an icon of a running game, an icon connected to a corresponding network and the like. The device may further include an optical mouse. The optical mouse is a touch sensitive surface which does not display the visual output or an extension of the touch sensitive surface formed by the touch screen.

The RF circuit 805 is mainly configured to establish communication between the mobile phone and a wireless network (i.e., a network side) to implement data reception and sending, for example, reception and sending of short messages and electronic mails, between the mobile phone and the wireless network. Specifically, the RF circuit 805 receives and sends an RF signal. The RF signal may also be called an electromagnetic signal. The RF circuit 805 converts the electrical signal into the electromagnetic signal or converts the electromagnetic signal into the electrical signal and communicates with the communication network and another device through the electromagnetic signal. The RF circuit 805 may include a known circuit configured to realize these functions and includes, but not limited to, an antenna system, an RF transceiver, one or more amplifiers, a tuner, one or more oscillators, a digital signal processor, a COder-DECoder (CODEC) chip set, a subscriber identity module (SIM) and the like.

The audio circuit 806 is mainly configured to receive audio data from the peripheral interface 803, convert the audio data into an electrical signal and send the electrical signal to the speaker 811.

The speaker 811 is configured to restore a voice signal received from the wireless network by the mobile phone through the RF circuit 805 into a sound and play the sound to the user.

The power management chip 808 is configured to perform power supply and power management on hardware connected with the CPU 802, the I/O subsystem and the peripheral interface.

According to the intelligent terminal provided in the embodiments of the disclosure, for an application corresponding to a push message a user is interested in, an application interface of the application corresponding to the push message may be preloaded in the preloading active window stack created outside the display screen. In such a preloading manner, preparations for starting of an application may be completed to a relatively great extent, a starting speed of the target application may be increased and influence on displaying of a display content of a foreground application on the display screen may be eliminated.

The application preloading device, storage medium and intelligent terminal provided in the embodiments may execute the application preloading method provided in any embodiment of the disclosure and have corresponding function modules executing the method and corresponding beneficial effects. Technical details not elaborated in the above embodiments may refer to the application preloading method provided in any embodiment of the disclosure.

The above is only the preferred embodiment of the disclosure and the adopted technical principle. Those skilled in the art should know that the application is not limited to the specific embodiments described herein. Those skilled in the art may make various apparent variations, regulations and replacements without departing from the scope of protection of the disclosure. The scope of the disclosure is determined by the scope of the appended claims.

## Claims

1. A method for preloading an application, implemented by an intelligent terminal, **characterized in that** the method comprises the steps of:
acquiring (110, 501), in response to receiving a push message from a server corresponding to an application, a message content of the push message;
determining (120), based on the message content, whether the application is to be preloaded; and
preloading (130), by a processor of the intelligent terminal, an application interface corresponding to the application to be preloaded in a precreated preloading active window stack, a boundary coordinate corresponding to the preloading active window stack being located outside a coordinate range of a display screen;
wherein preloading the application interface corresponding to the application to be preloaded in the precreated preloading active window stack comprises:
creating (506) a target process corresponding to the application to be preloaded;
creating (507) a task stack corresponding to the application to be preloaded in the precreated preloading active window stack;
starting (508) an active window corresponding to the application to be preloaded in the task stack based on the target process, and sending (508) a falsified focus notification to the application to be preloaded, wherein the falsified focus notification comprises focus information of the application to be preloaded, and the active window is an independent interface directly oriented for interaction and operations of a user;
updating (509) a focus flag corresponding to the application to be preloaded based on the focus information in the falsified focus notification, and continuously drawing (509) and displaying updating of the application interface corresponding to the application to be preloaded in a preset time period based on the falsified focus notification, a length of the preset time period comprising a playing duration of a starting advertisement or starting animation in the application to be preloaded.

2. The method of claim 1, wherein determining, based on the message content, whether the application is to be preloaded comprises:
inputting (502) the message content into a prediction model, and acquiring (502) a probability of the application to be preloaded based on an output of the prediction model; and
determining (503) that the application is to be preloaded if the probability exceeds a set probability threshold.

3. The method of claim 2, wherein the prediction model is obtained by:
acquiring, in response to detecting that a model training event is triggered, a historical push message sample marked based on an application starting operation, a terminal state corresponding to a historical push message and application information corresponding to the historical push message as a training sample; and
training, based on the training sample, a preset initial model to obtain the prediction model.

4. The method of claim 3, wherein the model training event is triggered under one of the following conditions:
a number of training samples exceeds a preset threshold;
a time interval with a last training exceeds a preset time threshold; or
a number of training samples exceeds a preset threshold, a time interval with a last training exceeds a preset time threshold, and an intelligent terminal is in idle.

5. The method of claim 1, wherein preloading the application interface corresponding to the application to be preloaded in the precreated preloading active window stack comprises:
determining (504) whether the precreated preloading active window stack exists;
creating (505) the preloading active window stack according to a preset rule when no precreated preloading active window stack exists; and
preloading the application interface corresponding to the application to be preloaded in the created preloading active window stack.

6. The method of any one of claims 1-5, further comprising: after preloading the application interface corresponding to the application to be preloaded in the precreated preloading active window stack,
migrating (510), in response to receiving a running instruction for a target application, an application interface corresponding to the target application in the preloading active window stack to the display screen for displaying.

7. The method of claim 6, wherein migrating the application interface corresponding to the target application in the preloading active window stack to the display screen for displaying comprises:
deleting a task stack corresponding to the target application from the preloading active window stack and adding the task stack corresponding to the target application to a top of an application active window stack; and
updating (511) size information, configuration information and visibility of the task stack to display an application interface of the target application on the display screen.

8. A device for preloading an application, located in an intelligent terminal, **characterized in that** the device comprises:
a content acquisition module (610), configured to, acquire, in response to receiving a push message from a server corresponding to an application, a message content of the push message;
an application determination module (620), configured to determine, based on the message content, whether the application is to be preloaded; and
an application preloading module (630), configured to preload, through a processor of the intelligent terminal, an application interface corresponding to the application to be preloaded in a precreated preloading active window stack, a boundary coordinate corresponding to the preloading active window stack being located outside a coordinate range of a display screen;
wherein the application preloading module is specifically configured to:
create a target process corresponding to the application to be preloaded;
create a task stack corresponding to the application to be preloaded in the precreated preloading active window stack;
start an active window corresponding to the application to be preloaded in the task stack based on the target process, and send a falsified focus notification to the application to be preloaded, wherein the falsified focus notification comprises focus information of the application to be preloaded, and the active window is an independent interface directly oriented for interaction and operations of a user;
update a focus flag corresponding to the application to be preloaded based on the focus information in the falsified focus notification, and continuously draw and display updating of the application interface corresponding to the application to be preloaded in a preset time period based on the falsified focus notification, a length of the preset time period comprising a playing duration of a starting advertisement or starting animation in the application to be preloaded.

9. The device of claim 8, wherein the application determination module (620) is specifically configured to:
input the message content into a prediction model and acquire a probability of the application to be preloaded based on an output of the prediction model; and
determine that the application is to be preloaded if the probability exceeds a set probability threshold.

10. The device of claim 8, wherein the device further comprises:
an application running module, configured to, after the application interface corresponding to the application to be preloaded is preloaded in the precreated preloading active window stack, in response to receiving a running instruction for a target application, migrate an application interface corresponding to the target application in the preloading active window stack to the display screen for displaying.

11. The device of claim 10, wherein the application running module is specifically configured to:
delete a task stack corresponding to the target application from the preloading active window stack and add the task stack corresponding to the target application to a top of an application active window stack; and
update (511) size information, configuration information and visibility of the task stack to display an application interface of the target application on the display screen.

12. A computer-readable storage medium, having a computer program stored thereon, wherein the computer program is executed by a processor to implement the method for preloading an application of any one of claims 1 to 7.

13. A computer program including instructions for executing the steps of the method for preloading an application of any one of claims 1 to 7 when said program is executed by a computer.

## Patentansprüche

1. Verfahren zum Vorladen einer Anwendung, implementiert durch ein intelligentes Endgerät, **dadurch gekennzeichnet, dass** das Verfahren die folgenden Schritte umfasst:
Erfassen (110, 501), als Reaktion auf einen Empfang einer Push-Nachricht von einem Server, der einer Anwendung entspricht, eines Nachrichteninhalts der Push-Nachricht;
Bestimmen (120), basierend auf dem Nachrichteninhalt, ob die Anwendung vorzuladen ist; und
Vorladen (130), durch einen Prozessor des intelligenten Endgeräts, einer Anwendungsschnittstelle, die der vorzuladenden Anwendung entspricht, in einem vorab erstellten Vorladungs-Aktivfensterstapel, wobei eine Grenzkoordinate dem sich außerhalb eines Koordinatenbereichs eines Anzeigebildschirms befindenden Vorladungs-Aktivfensterstapel entspricht;
wobei das Vorladen der Anwendungsschnittstelle, die der vorzuladenden Anwendung entspricht, in dem vorab erstellten Vorladungs-Aktivfensterstapel Folgendes umfasst:
Erstellen (506) eines Zielprozesses, der der vorzuladenden Anwendung entspricht;
Erstellen (507) eines Aufgabenstapels, der der vorzuladenden Anwendung entspricht, in dem vorab erstellten Vorladungs-Aktivfensterstapel;
Starten (508) eines aktiven Fensters, das der vorzuladenden Anwendung entspricht, in dem Aufgabenstapel basierend auf dem Zielprozess, und Senden (508) einer Verfälschter-Fokus-Benachrichtigung an die vorzuladende Anwendung, wobei die Verfälschter-Fokus-Benachrichtigung Fokusinformationen der vorzuladenden Anwendung umfasst und das aktive Fenster eine direkt für Interaktion und Operationen eines Benutzers ausgerichtete unabhängige Schnittstelle ist;
Aktualisieren (509) eines Fokus-Flags, das der vorzuladenden Anwendung entspricht, basierend auf den Fokusinformationen in der Verfälschter-Fokus-Benachrichtigung, und kontinuierliches Zeichnen (509) und Anzeigen einer Aktualisierung der Anwendungsschnittstelle, die der vorzuladenden Anwendung entspricht, in einer voreingestellten Zeitperiode basierend auf der Verfälschter-Fokus-Benachrichtigung, wobei eine Länge der voreingestellten Zeitperiode eine Abspieldauer einer Startankündigung oder einer Startanimation in der vorzuladenden Anwendung umfasst.

2. Verfahren nach Anspruch 1, wobei das Bestimmen, basierend auf dem Nachrichteninhalt, ob die Anwendung vorzuladen ist, Folgendes umfasst:
Eingeben (502) des Nachrichteninhalts in ein Vorhersagemodell und Erfassen (502) einer Wahrscheinlichkeit, dass die Anwendung vorzuladen ist, basierend auf einer Ausgabe des Vorhersagemodells; und
Bestimmen (503), dass die Anwendung vorzuladen ist, wenn die Wahrscheinlichkeit eine eingestellte Wahrscheinlichkeitsschwelle überschreitet.

3. Verfahren nach Anspruch 2, wobei das Vorhersagemodell durch Folgendes erhalten wird:
Erfassen, als Reaktion darauf, dass detektiert wird, dass ein Modelltrainingsereignis getriggert wird, einer historischen Push-Nachrichtenprobe, markiert basierend auf einer Anwendungsstartoperation, einem Endgerätezustand, der einer historischen Push-Nachricht entspricht, und Anwendungsinformationen, die der historischen Push-Nachricht entsprechen, als eine Trainingsprobe; und
Trainieren, basierend auf der Trainingsprobe, eines voreingestellten anfänglichen Modells, um das Vorhersagemodell zu erhalten.

4. Verfahren nach Anspruch 3, wobei das Modelltrainingsereignis unter einer der folgenden Bedingungen getriggert wird:
eine Anzahl von Trainingsproben überschreitet eine voreingestellte Schwelle;
ein Zeitintervall mit einem letzten Training überschreitet eine voreingestellte Zeitschwelle; oder
eine Anzahl von Trainingsproben überschreitet eine voreingestellte Schwelle, ein Zeitintervall mit einem letzten Training überschreitet eine voreingestellte Zeitschwelle und ein intelligentes Endgerät befindet sich im Ruhemodus.

5. Verfahren nach Anspruch 1, wobei das Vorladen der Anwendungsschnittstelle, die der vorzuladenden Anwendung entspricht, in dem vorab erstellten Vorladungs-Aktivfensterstapel Folgendes umfasst:
Bestimmen (504), ob der vorab erstellte Vorladungs-Aktivfensterstapel vorhanden ist;
Erstellen (505) des Vorladungs-Aktivfensterstapels gemäß einer voreingestellten Regel, wenn kein vorab erstellter Vorladungs-Aktivfensterstapel vorhanden ist; und
Vorladen der Anwendungsschnittstelle, die der vorzuladenden Anwendung entspricht, in dem erstellten Vorladungs-Aktivfensterstapel.

6. Verfahren nach einem der Ansprüche 1-5, das ferner Folgendes umfasst: nach dem Vorladen der Anwendungsschnittstelle, die der vorzuladenden Anwendung entspricht, in dem vorab erstellten Vorladungs-Aktivfensterstapel,
Migrieren (501), als Reaktion auf einen Empfang einer Ausführungsanweisung für eine Zielanwendung, einer Anwendungsschnittstelle, die der Zielanwendung entspricht, in dem Vorladungs-Aktivfensterstapel zu dem Anzeigebildschirm zur Anzeige.

7. Verfahren nach Anspruch 6, wobei das Migrieren der Anwendungsschnittstelle, die der Zielanwendung entspricht, in dem Vorladungs-Aktivfensterstapel zu dem Anzeigebildschirm zur Anzeige Folgendes umfasst:
Löschen eines Aufgabenstapels, der der Zielanwendung entspricht, aus dem Vorladungs-Aktivfensterstapel und Hinzufügen des Aufgabenstapels, der der Zielanwendung entspricht, oben auf einem Anwendungs-Aktivfensterstapel; und
Aktualisieren (511) von Größeninformationen, Konfigurationsinformationen und einer Sichtbarkeit des Aufgabenstapels, um eine Anwendungsschnittstelle der Zielanwendung auf dem Anzeigebildschirm anzuzeigen.

8. Vorrichtung zum Vorladen einer Anwendung, die sich in einem intelligenten Endgerät befindet, **dadurch gekennzeichnet, dass** die Vorrichtung Folgendes umfasst:
ein Inhaltserfassungsmodul (610), ausgelegt zum Erfassen, als Reaktion auf einen Empfang einer Push-Nachricht von einem Server, der einer Anwendung entspricht, eines Nachrichteninhalts der Push-Nachricht;
ein Anwendungsbestimmungsmodul (620), ausgelegt zum Bestimmen, basierend auf dem Nachrichteninhalt, ob die Anwendung vorzuladen ist; und
ein Anwendungsvorladungsmodul (630), ausgelegt zum Vorladen, über einen Prozessor des intelligenten Endgeräts, einer Anwendungsschnittstelle, die der vorzuladenden Anwendung entspricht, in einem vorab erstellten Vorladungs-Aktivfensterstapel, wobei eine Grenzkoordinate dem sich außerhalb eines Koordinatenbereichs eines Anzeigebildschirms befindenden Vorladungs-Aktivfensterstapel entspricht;
wobei das Anwendungsvorladungsmodul insbesondere zu Folgendem ausgelegt ist:
Erstellen eines Zielprozesses, der der vorzuladenden Anwendung entspricht;
Erstellen eines Aufgabenstapels, der der vorzuladenden Anwendung entspricht, in dem vorab erstellten Vorladungs-Aktivfensterstapel;
Starten eines aktiven Fensters, das der vorzuladenden Anwendung entspricht, in dem Aufgabenstapel basierend auf dem Zielprozess, und Senden einer Verfälschter-Fokus-Benachrichtigung an die vorzuladende Anwendung, wobei die Verfälschter-Fokus-Benachrichtigung Fokusinformationen der vorzuladenden Anwendung umfasst und das aktive Fenster eine direkt für Interaktion und Operationen eines Benutzers ausgerichtete unabhängige Schnittstelle ist;
Aktualisieren eines Fokus-Flags, das der vorzuladenden Anwendung entspricht, basierend auf den Fokusinformationen in der Verfälschter-Fokus-Benachrichtigung, und kontinuierliches Zeichnen und Anzeigen einer Aktualisierung der Anwendungsschnittstelle, die der vorzuladenden Anwendung entspricht, in einer voreingestellten Zeitperiode basierend auf der Verfälschter-Fokus-Benachrichtigung, wobei eine Länge der voreingestellten Zeitperiode eine Abspieldauer einer Startankündigung oder einer Startanimation in der vorzuladenden Anwendung umfasst.

9. Vorrichtung nach Anspruch 8, wobei das Anwendungsbestimmungsmodul (620) insbesondere zu Folgendem ausgelegt ist:
Eingeben des Nachrichteninhalts in ein Vorhersagemodell und Erfassen einer Wahrscheinlichkeit, dass die Anwendung vorzuladen ist, basierend auf einer Ausgabe des Vorhersagemodells; und
Bestimmen, dass die Anwendung vorzuladen ist, wenn die Wahrscheinlichkeit eine eingestellte Wahrscheinlichkeitsschwelle überschreitet.

10. Vorrichtung nach Anspruch 8, wobei die Vorrichtung ferner Folgendes umfasst:
ein Anwendungsausführungsmodul, ausgelegt zum, nachdem die Anwendungsschnittstelle, die der vorzuladenden Anwendung entspricht, in dem vorab erstellten Vorladungs-Aktivfensterstapel vorgeladen wurde, als Reaktion auf einen Empfang einer Ausführungsanweisung für eine Zielanwendung, Migrieren einer Anwendungsschnittstelle, die der Zielanwendung entspricht, in dem Vorladungs-Aktivfensterstapel zu dem Anzeigebildschirm zur Anzeige.

11. Vorrichtung nach Anspruch 10, wobei das Anwendungsausführungsmodul insbesondere zu Folgendem ausgelegt ist:
Löschen eines Aufgabenstapels, der der Zielanwendung entspricht, aus dem Vorladungs-Aktivfensterstapel und Hinzufügen des Aufgabenstapels, der der Zielanwendung entspricht, oben auf einem Anwendungs-Aktivfensterstapel; und
Aktualisieren (511) von Größeninformationen, Konfigurationsinformationen und einer Sichtbarkeit des Aufgabenstapels, um eine Anwendungsschnittstelle der Zielanwendung auf dem Anzeigebildschirm anzuzeigen.

12. Computerlesbares Speichermedium mit einem darauf gespeicherten Computerprogramm, wobei das Computerprogramm durch einen Prozessor ausgeführt wird, um das Verfahren zum Vorladen einer Anwendung nach einem der Ansprüche 1 bis 7 zu implementieren.

13. Computerprogramm, das Anweisungen zum Ausführen der Schritte des Verfahrens zum Vorladen einer Anwendung nach einem der Ansprüche 1 bis 7, wenn das Programm durch einen Computer ausgeführt wird, beinhaltet.

## Revendications

1. Procédé de chargement d'une application, mis en œuvre par un terminal intelligent, **caractérisé en ce que** le procédé comprend les étapes suivantes :
l'acquisition (110, 501), en réponse à la réception d'un message push depuis un serveur correspondant à une application, d'un contenu de message du message push ;
la détermination (120), en fonction du contenu de message, que l'application doit être préchargée ou non ; et
le préchargement (130), par un processeur du terminal intelligent, d'une interface d'application correspondant à l'application à précharger dans une pile de fenêtres actives de préchargement précréée, une coordonnée de frontière correspondant à la pile de fenêtres actives de préchargement étant située en dehors d'une plage de coordonnées d'un écran d'affichage ;
dans lequel le préchargement de l'interface d'application correspondant à l'application à précharger dans la pile de fenêtres actives de préchargement précréée comprend :
la création (506) d'un processus cible correspondant à l'application à précharger ;
la création (507) d'une pile de tâches correspondant à l'application à précharger dans la pile de fenêtres actives de préchargement précréée ;
le lancement (508) d'une fenêtre active correspondant à l'application à précharger dans la pile de tâches sur la base du processus cible, et l'envoi (508) d'une notification de cible falsifiée à l'application à précharger, la notification de cible falsifiée comprenant des informations de cible de l'application à précharger, et la fenêtre active étant une interface indépendante orientée directement pour une interaction et des opérations d'un utilisateur ;
la mise à jour (509) d'un fanion de cible correspondant à l'application à précharger sur la base des informations de cible dans la notification de cible falsifiée, et la mise à jour continue du dessin (509) et de l'affichage de l'interface d'application correspondant à l'application à précharger dans une période de temps prédéfinie sur la base de la notification de cible falsifiée, une longueur de la période de temps prédéfinie comprenant une durée de lecture d'une annonce initiale ou d'une animation initiale dans l'application à précharger.

2. Procédé selon la revendication 1, dans lequel la détermination, en fonction du contenu de message, que l'application doit être préchargée ou non comprend :
l'entrée (502) du contenu de message dans un modèle de prédiction, et l'acquisition (502) d'une probabilité de l'application à précharger en fonction d'une sortie du modèle de prédiction ; et
la détermination (503) que l'application doit être préchargée si la probabilité dépasse un seuil de probabilité défini.

3. Procédé selon la revendication 2, dans lequel le modèle de prédiction est obtenu en :
acquérant, en réponse à la détection qu'un événement de formation de modèle est déclenché, un échantillon de message push historique marqué en fonction d'une opération de lancement d'application, d'un état terminal correspondant à un message push historique et d'informations d'application correspondant au message push en tant qu'échantillon de formation ; et
formant, sur la base de l'échantillon de formation, un modèle initial prédéfini pour obtenir le modèle de prédiction.

4. Procédé selon la revendication 3, dans lequel l'événement de formation de modèle est déclenché dans l'une des conditions suivantes :
un nombre d'échantillons de formation dépasse un seuil prédéfini ;
un intervalle de temps avec une dernière formation dépasse un seuil de temps prédéfini ; ou
un nombre d'échantillons de formation dépasse un seuil prédéfini, un intervalle de temps avec une dernière formation dépasse un seuil de temps prédéfini, et un terminal intelligent est inactif.

5. Procédé selon la revendication 1, dans lequel le préchargement de l'interface d'application correspondant à l'application à précharger dans la pile de fenêtres actives de préchargement précréée comprend :
la détermination (504) que la pile de fenêtres actives de préchargement précréée existe ou non ;
la création (505) de la pile de fenêtres actives de préchargement conformément à une règle prédéfinie quand aucune pile de fenêtres actives de préchargement précréée n'existe ; et
le préchargement de l'interface d'application correspondant à l'application à précharger dans la pile de fenêtres actives de préchargement précréée.

6. Procédé selon l'une quelconque des revendications 1 à 5, comprenant en outre : après le préchargement de l'interface d'application correspondant à l'application à précharger dans la pile de fenêtres actives de préchargement précréée,
la migration (510), en réponse à la réception d'une instruction d'exécution d'une application cible, d'une interface d'application correspondant à l'application cible dans la pile de fenêtres actives de préchargement vers l'écran d'affichage en vue de son affichage.

7. Procédé selon la revendication 6, dans lequel la migration de l'interface d'application correspondant à l'application cible dans la pile de fenêtres actives de préchargement vers l'écran d'affichage de son affichage comprend :
la suppression d'une pile de tâches correspondant à l'application cible dans la pile de fenêtres actives de préchargement et l'ajout de la pile de tâches correspondant à l'application cible à une tête d'une pile de fenêtres actives d'application ; et
la mise à jour (511) d'informations de taille, d'informations de configuration et d'une visibilité de la pile de tâches pour afficher une interface d'application de l'application cible sur l'écran d'affichage.

8. Dispositif de préchargement d'une application, situé dans un terminal intelligent, **caractérisé en ce que** le dispositif comprend :
un module d'acquisition de contenu (610), configuré pour acquérir, en réponse à un message push depuis un serveur correspondant à une application, un contenu de message du message push ;
un module de détermination d'application (620), configuré pour déterminer, en fonction du contenu de message, que l'application doit être préchargée ou non ; et
un module de préchargement d'application (630), configuré pour précharger, par le biais d'un processeur du terminal intelligent, une interface d'application correspondant à l'application à précharger dans une pile de fenêtres actives de préchargement précréée, une coordonnée de frontière correspondant à la pile de fenêtres actives de préchargement située en dehors d'une plage de coordonnées d'un écran d'affichage ;
dans lequel le module de préchargement d'application est configuré spécifiquement pour :
créer un processus cible correspondant à l'application à précharger ;
créer une pile de tâches correspondant à l'application à précharger dans la pile de fenêtres actives de préchargement précréée ;
lancer une fenêtre active correspondant à l'application à précharger dans la pile de tâches sur la base du processus cible, et envoyer une notification de cible falsifiée à l'application à précharger, la notification de cible falsifiée comprenant des informations de cible de l'application à précharger, et la fenêtre active étant une interface indépendante orientée directement pour une interaction et des opérations d'un utilisateur ;
mettre à jour un fanion de cible correspondant à l'application à précharger sur la base des informations de cible dans la notification de cible falsifiée, et mettre à jour continûment le dessin et l'affichage de l'interface d'application correspondant à l'application à précharger dans une période de temps prédéfinie sur la base de la notification de cible falsifiée, une longueur de la période de temps prédéfinie comprenant une durée de lecture d'une annonce initiale ou d'une animation initiale dans l'application à précharger.

9. Dispositif selon la revendication 8, dans lequel le module de détermination d'application (620) est configuré spécifiquement pour :
entrer le contenu de message dans modèle de prédiction et acquérir une probabilité de l'application à précharger en fonction d'une sortie du modèle de prédiction ; et
déterminer que l'application doit être préchargée si la probabilité dépasse un seuil de probabilité défini.

10. Dispositif selon la revendication 8, le dispositif comprenant en outre :
un module d'exécution d'application, configuré pour, après que l'interface d'application correspondant à l'application à précharger est préchargée dans la pile de fenêtres actives de préchargement précréée, en réponse à la réception d'une instruction d'exécution d'une application cible, migrer une interface d'application correspondant à l'application cible dans la pile de fenêtres actives de préchargement vers l'écran d'affichage en vue de son affichage.

11. Dispositif selon la revendication 10, dans lequel le module d'exécution d'application est configuré spécifiquement pour :
supprimer une pile de tâches correspondant à l'application cible dans la pile de fenêtres actives de préchargement et ajouter la pile de tâches correspondant à l'application cible à une tête d'une pile de fenêtres actives d'application ; et
mettre à jour (511) des informations de taille, des informations de configuration et une visibilité de la pile de tâches pour afficher une interface d'application de l'application cible sur l'écran d'affichage.

12. Support de mémorisation lisible par ordinateur, sur lequel est mémorisé un programme informatique, le programme informatique étant exécuté par un processeur pour mettre en œuvre le procédé de préchargement d'une application selon l'une quelconque des revendications 1 à 7.

13. Programme informatique comportant des instructions pour exécuter les étapes du procédé de préchargement d'une application selon l'une quelconque des revendications 1 à 7 quand ledit programme est exécuté par un ordinateur.
